# EUROPEAN PATENT APPLICATION

(11) **EP 1 055 593 A2**
(43) Date of publication of application: **29.11.2000**
(21) Application number: 00111290.3
(22) Date of filing: 25.05.2000
(51) Int. Cl.: B62H 5/00, E05B 71/00

(54) **U-shaped antitheft device**

(30) Priority: 26.05.1999 JP 14666399
(71) Applicant: MORIYAMA MANUFACTURING CO., LTD., Shuchi-gun, Shizuoka, 437-0292 (JP)
(72) Inventor: Yamaoka, Hiroshi, Shuchi-gun, Shizuoka 437-0292 (JP)
(74) Representative: Grünecker, Kinkeldey, Stockmair & Schwanhäusser Anwaltssozietät

(57) **Abstract**

A U-shaped antitheft device comprises: a U-shaped arm member 3 having lock recesses 4a formed in two end portions thereof; a bar member 2 having a pair of insertion holes 8 for receiving insertion of the two end portions of the arm member 3, a rod hole 9 for slidably receiving push rods (rod members) 20 so that the push rods 30 are engaged/disengaged with/from the lock recesses 4a of the arm member 3, and a lock hole 10 for receiving and supporting a cylinder lock 13, the respective holes having axes located in one and the same plane; springs (urge members) 21 provided in the rod hole 9 for urging the push rods 20 to retreat; and support members 11 connected to the bar member 2 (a body 6) in the rod hole 9 for supporting the springs 21. In the U-shaped antitheft device, the support members 11 are connected to the bar member 2 (the body 6) by tapered pins (pin members) 12 provided in boundary portions between the support members 11 and the bar member 2 (the body 6) in the plane where the respective axes of the insertion holes 8, the rod hole 9 and the lock hole 10 formed in the bar member 2 exist, the tapered pins 12 being knocked into the boundary portions perpendicularly to the plane.

## Description

### BACKGROUND OF THE INVENTION

### 1. Field of the Invention

The present invention relates to a U-shaped antitheft device to be used for preventing a vehicle from being stolen.

### 2. Description of the Related Art

A U-shaped antitheft device for preventing an autobicycle, or the like, from being stolen has a bar member, and an arm member which can be attached to and removed from the bar member. The bar member includes rod members, and a cylinder lock. When two end portions of the arm member are inserted into a pair of insertion holes in the bar member, the rod members are engaged with lock recesses formed in the two end portions of the arm member to thereby lock the connection between the arm member and the bar member. Thus, the expected purpose of the antitheft device is achieved.

Incidentally, such a U-shaped antitheft device needs to have the strength to withstand strong impact by means of a hammer, or the like, and cutting by means of a saw, or the like, in terms of its function. There has been a proposal that the basic layout of the U-shaped antitheft device is managed so that the thickness of the U-shaped antitheft device is reduced while the required strength is kept maintained with enhanced mounting property of the U-shaped antitheft device on an autobicycle, or the like (see Japanese Patent Unexamined Published No. Hei. 9-112108(JP-A-9-112108)).

Incidentally, in the conventional U-shaped antitheft device, support members for slidably supporting the rod members thereon were thread-engaged with or forced into a rod hole formed in the bar member.

In the system in which the support members were thread-engaged with the rod hole, however, it was difficult to assemble the support members and urge members such as springs into the rod hole as well as it was necessary to form male threads in outer circumferential surfaces of the support members and form female threads in inner circumferential surfaces of the rod hole. Hence, there was a problem that the number of assembling steps was increased to thereby increase the cost. Moreover, since male threads were formed in outer circumferential surfaces of the support members, outer walls of the support members were thickened and the device was thickened as well. Hence, there was also a problem that the mounting property of the antitheft device on a vehicle was worsened.

Further, in the system in which the support members were forced into the rod hole, it was necessary to control the inner diameter of the rod hole and the outer diameter of each of the support members strictly. Hence, there was a problem that increase in cost was inevitable. Moreover, it was necessary to secure the strength of the support members. Therefore, there was also a problem that the size of the support members became so large that the device was thickened.

On the other hand, there has been also a proposal that the bar member is constituted by an inner member of an aluminum die-casting and an outer member of a high-strength iron pipe in order to enhance processability (see JP-A-9-112108). In this proposed configuration, however, the bar member became thicker than the arm member, so that there was still room for improvement in the mounting property of the U-shaped antitheft device on a vehicle.

### SUMMARY OF THE INVENTION

The present invention has been achieved in consideration of the aforementioned problems and an object thereof is to provide a U-shaped antitheft device in which processability and assembling property of parts of the device can be improved to attain reduction in cost and in which the thickness of the device can be reduced to enhance the mounting property of the device on a vehicle.

In order to achieve the above object, according to a first aspect of the invention, there is provided a U-shaped antitheft device comprising: a U-shaped arm member having lock recesses formed in two end portions thereof; a bar member having a pair of insertion holes for receiving insertion of the two end portions of the arm member, a rod hole for slidably receiving rod members so that the rod members are engaged/disengaged with/from the lock recesses of the arm member, and a lock hole for receiving and supporting a cylinder lock, the respective holes having axes located in one and the same plane; urge members provided in the rod hole for urging the rod members to retreat; and support members connected to the bar member in the rod hole for supporting the urge members, wherein the support members are connected to the bar member by pin members provided in boundary portions between the support members and the bar member in the plane where the respective axes of the insertion holes, the rod hole and the lock hole formed in the bar member exist, the pin members being knocked into the boundary portions perpendicularly to the plane.

According to a second aspect of the invention, there is provided a U-shaped antitheft device comprising: a U-shaped arm member having lock recesses formed in two end portions thereof; a bar member having a pair of insertion holes for receiving insertion of the two end portions of the arm member, a rod hole for slidably receiving rod members so that the rod members are engaged/disengaged with/from the lock recesses of the arm member, and a lock hole for supportively receiving insertion of a cylinder lock, the respective holes having axes located in one and the same plane, urge members provided in the rod hole for urging the rod members to retreat; and support members connected to the bar member in the rod hole for supporting the urge members, wherein the cylinder lock is connected to the bar member by pin members provided in boundary portions between the cylinder lock and the bar member in the plane where the respective axes of the insertion holes, the rod hole and the lock hole formed in the bar member exist, the pin members being knocked into the boundary portions perpendicularly to the plane.

According to a third aspect of the invention, there is provided a U-shaped antitheft device comprising: a U-shaped arm member having lock recesses formed in two end portions thereof; a bar member having a pair of insertion holes for receiving insertion of the two end portions of the arm member, a rod hole for supportively receiving insertion of support members adapted to slidably support rod members which are engaged/disengaged with/from the lock recesses of the arm member, and a lock hole for supportively receiving insertion of a cylinder lock, the respective holes having axes located in one and the same plane; and urge members provided in the rod hole for urging the rod members to retreat, wherein the support members and the cylinder lock are connected to the bar member by pin members which are provided in first boundary portions between the support members and the bar member and in second boundary portions between the cylinder lock and the bar member, the first and second boundary portions being located in the plane where the respective axes of the insertion holes, the rod hole and the lock hole formed in the bar member exist, the pin members being knocked into the first and second boundary portions perpendicularly to the plane.

Hence, in accordance with from the first aspect to the third aspect of the invention, the connection of the support members and/or the cylinder lock to the bar member is performed by knocking of the pin members. Accordingly, it becomes unnecessary to control the outer diameter of the support members and/or the cylinder lock and the inner diameter of the rod hole and/or the lock hole strictly. Moreover, since any thread cutting process, or the like, is not required, respective parts can be processed and assembled easily, so that the number of processing steps and the number of assembling steps are reduced. Hence, reduction in the cost of the U-shaped antitheft device is achieved. Moreover, the connection of the support members and/or the cylinder lock to the bar member is performed by the pin members knocked into the boundary portions between the support members and the bar member and/or between the cylinder lock and the bar member in the plane of presence of the respective axes of the insertion holes, the rod hole and the lock hole formed in the bar member, perpendicularly to the plane. Accordingly, a large contact area can be secured between the support members and the pin members and/or between the cylinder lock and the pin members. Hence, the diameter of the support members and/or the cylinder lock can be reduced correspondingly, so that the thickness of the device can be reduced correspondingly. Hence, the mounting property of the U-shaped antitheft device on a vehicle can be enhanced.

In addition, according to the U-shaped antitheft device in the first aspect to the third aspect of the invention, it can be made that each of the support members has a length set to be approximately equal to that of corresponding one of the rod members, and wherein each of the urge members is received in a space which is formed between the support member and the rod member.

According to this embodiment, the support members and the rod members can be assembled in advance in the condition that each urge member is received in a space formed between corresponding one of the support members and corresponding one of the rod members. Accordingly, respective parts can be assembled more easily, so that the number of assembling steps can be reduced more greatly.

Further, According to the first aspect to the third aspect of the invention, it can be made that the bar member is formed as a one-piece forging of iron.

According to this embodiment, the bar member is configured as a one-piece forging of iron. Accordingly, the thickness of the bar member can be reduced while the required strength of the bar member is secured. Hence, reduction in the number and weight of parts can be attained as well as the mounting property of the U-shaped antitheft device on a vehicle can be enhanced.

### BRIEF DESCRIPTION OF THE DRAWINGS

Fig. 1 is a perspective view of a U-shaped antitheft device according to the present invention;
Fig. 2 is a partly sectional view showing the internal configuration of a bar member in the U-shaped antitheft device according to the present invention;
Fig. 3 is a sectional view taken along the line A-A in Fig. 2;
Fig. 4 is a sectional view taken along the line B-B in Fig. 2;
Fig. 5 is a sectional view taken along the line C-C in Fig. 2;
Fig. 6 is a partly sectional view showing a locked state of the U-shaped antitheft device according to the present invention;
Fig. 7 is a plane cross sectional view showing the locked state of the U-shaped antitheft device according to the present invention;
Fig. 8 is a partly sectional view showing an unlocked state of the U-shaped antitheft device according to the present invention; and
Fig. 9 is a plane cross sectional view showing the unlocked state of the U-shaped antitheft device according to the present invention.

### DETAILED DESCRIPTION OF THE PREFERED EMBODIMENT

An embodiment of the present invention will be described below with reference to the accompanying drawings.

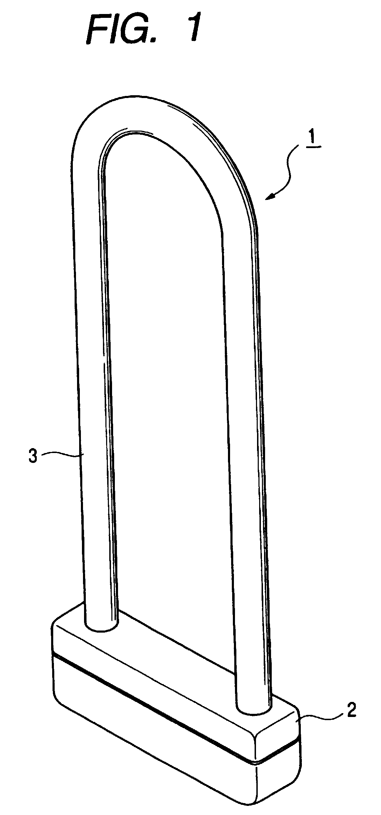

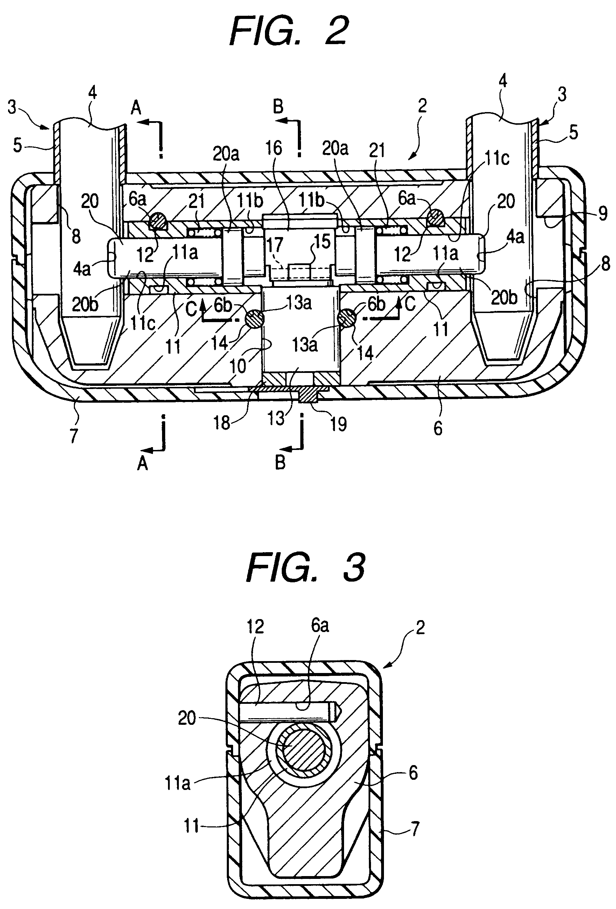

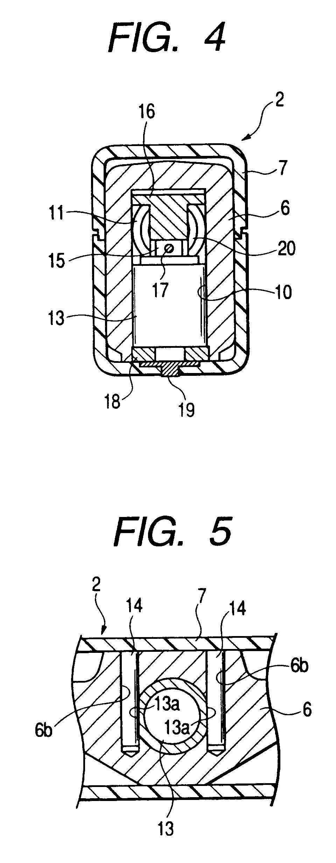

Fig. 1 is a perspective view of a U-shaped antitheft device according to the present invention; Fig. 2 is a partly sectional view showing the internal configuration of a bar member in the antitheft device; Fig. 3 is a sectional view taken along the line A-A in Fig. 2; Fig. 4 is a sectional view taken along the line B-B in Fig. 2; and Fig. 5 is a sectional view taken along the line C-C in Fig. 2.

The U-shaped antitheft device shown in Fig. 1 is used for an autobicycle and constituted by a rectangular block-shaped bar member 2, and a U-shaped arm member 3 which can be attached (connected) to and removed (disconnected) from the bar member 2.

As shown in Fig. 2, the arm member 3 is configured so that a metal shackle arm 4 bent to be U-shaped is coated with a resin protector 5 except for two end portions of the shackle arm 4. The two end portions of the shackle arm 4 are provided with lock recesses 4a formed in their opposite inner faces respectively.

On the other hand, the bar member 2 is configured so that an approximately rectangular block-shaped body 6 which is a one-piece forging of iron has an outer surface covered with a resin cover 7 separated into upper and lower parts. Insertion holes 8 are vertically formed in two lengthwise end portions of the body 6 so that the two end portions of the shackle arm 4 of the arm member 3 are inserted into the insertion holes 8. Further, a rod hole 9 is transversely formed in the body 6 so as to cross the insertion holes 8 perpendicularly. A lock hole 10 is formed in the center portion of the body 6 so as to be open to the rod hole 9. Incidentally, the insertion holes 8, the rod hole 9 and the lock hole 10 are formed in the body 6 so that the axes of those holes 8, 9 and 10 are located in one and the same plane.

Incidentally, a pair of left and right approximately cylindrical support members 11 are inserted into portions which are of the rod hole 9 formed in the body 6 constituting the bar member 2 and which are inside the insertion holes 8 respectively. The pair of support members 11 are positioned to be connected to the body 6 by tapered pins 12 knocked into boundary portions between the body 6 and the support members 11 in a direction perpendicular to the paper surface in Fig. 2 (in a direction perpendicular to the plane in which respective axes of the insertion holes 8, the rod hole 9 and the lock hole 10 are located). That is, as shown in Figs. 2 and 3, grooves 11a are formed in outer circumferential surfaces of the support members 11 around the whole thereof whereas tapered holes 6a each shaped like a half circle in sectional view are formed in portions of the body 6 corresponding to the grooves 11a. Hence, the support members 11 are positioned so as to be connected to the body 6 as described above by the tapered pins 12 knocked into the grooves 11a and the tapered holes 6a.

Further, as shown in Figs. 2, 4 and 5, a cylinder lock 13 is inserted into the lock hole 10 formed in the body 6. The cylinder lock 13 is positioned so as to be connected to the body 6 by two tapered pins 14 knocked into boundary portions between the cylinder lock 13 and the body 6 in the direction perpendicular to the paper surface in Fig. 2 (in the direction perpendicular to the plane in which the respective axes of the insertion holes 8, the rod hole 9 and the lock hole 10 are located). That is, grooves 13a are formed in two portions of the outer circumferential surface of the cylinder lock 13 whereas tapered holes 6b each shaped like a notched circle in sectional view are formed in portions of the body 6 corresponding to the grooves 13a so that each of the grooves 13a and corresponding one of the tapered holes 6b form a tapered hole shaped like a circle in sectional view. Hence, the cylinder lock 13 is positioned so as to be connected to the body 6 as described above by the tapered pins 14 knocked into the sectionally circular tapered holes formed by the grooves 13a and the tapered holes 6b.

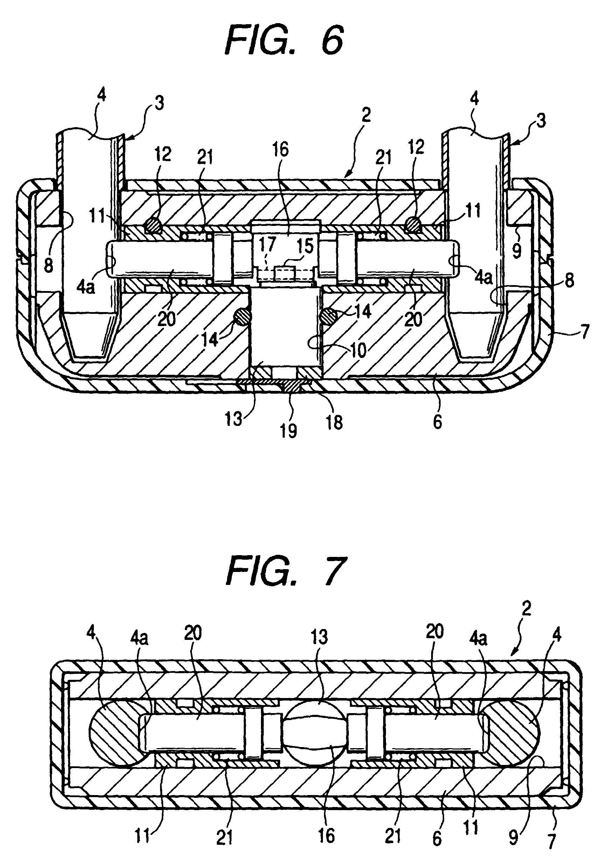

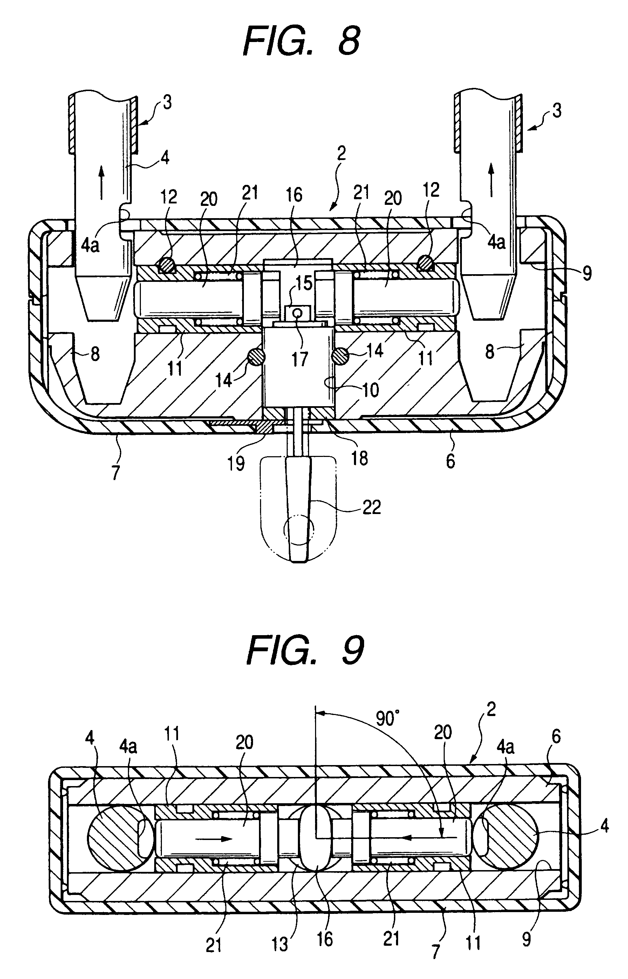

Incidentally, a shaft 15 is rotatably provided in an axial center portion of the cylinder lock 13, and a cam 16 approximately shaped like an elliptic cylinder (see Figs. 7 and 9) is connected, by a pin 17, to the upper end portion of the shaft 15 facing the rod hole 9. The lower end of the cylinder lock 13 is received by the cover 7 through a ring-like plug 18 which is made from the same material as that of the body 6. Further, a key slot not shown is opened in a region which is on the lower surface of the cylinder lock 13 and surrounded by the plug 18. The key slot is opened/closed by a cap 19 slidably supported by the cover 7.

On the other hand, as shown in Fig. 2, circular holes 11b and 11c different in diameter are formed in the axial center portion of each of the support members 11. Push rods 20 which are rod members are slidably supported by the support members 11 respectively. That is, a large-diameter flange portion 20a is integrally formed as a part of each of the push rods 20 so as to be slidably supported in the large-diameter circular hole 11b of the support member 11 while a long small-diameter portion 20b of the push rod 20 is slidably supported in the small-diameter circular hole 11c of the support member 11.

On this occasion, the length of each of the support members 11 is set to be approximately equal to that of corresponding one of the push rods 20. Hence, cylindrical spaces are defined, in the large-diameter circular holes 11b of the support members 11 by the flange portions 20a of the push rods 20 respectively. Springs 21 which are urge members are compressively provided in the spaces respectively. Each of the springs 21 has one end which abuts on a step portion of corresponding one of the push rods 20 between the large-diameter and small-diameter circular holes 11b and 11c of the corresponding support members 11, and the other end which abuts on the flange portion 20a of the push rod 20. Accordingly, the springs 21 urge the push rods 20 to retreat (in the direction of release from the lock recesses 4a formed in the arm member 3 (in the unlocking direction)) while inner end portions of the push rods 20 abut on the outer circumferential surface of the cam 16 as shown in the drawings.

The operation of the U-shaped antitheft device 1 configured as described above will be described below with reference to Figs. 6 through 9. Incidentally, Fig. 6 is a partly sectional view of the U-shaped antitheft device in a locked state; Fig. 7 is a plane cross sectional view of the device in the same state; Fig. 8 is a partly sectional view of the U-shaped antitheft device in an unlocked state; and Fig. 9 is a plane cross sectional view of the device in the same state.

The U-shaped antitheft device 1 according to the present invention is mounted on an autobicycle in a locked state shown in Fig. 1 (that is, in a state in which the two end portions of the arm member 3 are inserted into the bar member 2 and the connection between the two members 2 and 3 is locked). When the U-shaped antitheft device 1 is in such a locked state, the cam 16 is in a state shown in Figs. 6 and 7. The two push rods 20 are pressed outward against the urging force of the springs 21. Hence, the end portions of the push rods 20 are engaged with the lock recesses 4a formed in the two end portions of the arm member 3 inserted into the insertion holes 8 of the bar member 2. Therefore, the arm member 3 is prevented from being removed from the bar member 2. As a result, the U-shaped antitheft device 1 is kept in a locked state.

The U-shaped antitheft device 1 is used for the parked autobicycle as follows. When a key 22 is turned by 90° after the key 22 has been inserted into the key slot not shown but opened in the lower surface of the cylinder lock 13 as shown in Fig. 8, the cam 16 rotates by the same angle together with the shaft 15 of the cylinder lock 13. Hence, as shown in Figs. 8 and 9, the push rods 20 abut on flat portions of the cam 16 and retreat by the urging force of the springs 21 so that the push rods 20 are disengaged from the lock recesses 4a formed in the two end portions of the arm member 3. As a result, the state in which the arm member 3 is locked in the bar member 2 is released, so that an unlocked state is obtained. Hence, as shown in Fig. 8, the arm member 3 can be pulled out so as to be removed from the bar member 2.

If the arm member 3 removed from the bar member 2 is made to pass through a rim of a wheel or a part of a vehicle body of the autobicycle and something fixed on the ground and then the cam 16 is returned to the state shown in Figs. 6 and 7 by the operation of the key 22 in the condition that the two end portions of the arm member 3 are inserted into the bar member 2, the cam 16 presses the push rods 20 outward. Hence, the end portions of the push rods 20 are engaged with the lock recesses 4a formed in the two end portions of the arm member 3. Hence, the arm member 3 is prevented from being removed from the bar member 2. As a result, the U-shaped antitheft device 1 gets into a locked state again. Accordingly, the autobicycle is prevented from being stolen because the wheel of the autobicycle is prevented from rotating or because the autobicycle is fixed to something fixed on the ground.

As described above, in the U-shaped antitheft device 1 according to the present invention, the positioning and fixture of the support members 11 and the cylinder lock 13 to the body 6 of the bar member 2 is performed by knocking of the tapered pins 12 and 14. Hence, it becomes unnecessary to control the outer diameters of the support members 11 and the cylinder lock 13 and the inner diameters of the rod hole 9 and the lock hole 10 strictly. Moreover, any thread cutting process, or the like, is not required. Hence, parts such as the support members 11, the cylinder lock 13, the body 6, etc. can be processed and assembled easily, so that the number of processing steps and the number of assembling steps can be reduced. Hence, reduction in the cost of the U-shaped antitheft device 1 can be achieved. Further, the support members 11 and the cylinder lock 13 are connected to the body 6 by the tapered pins 12 and 14 knocked into the boundary portions between the support members 11 and the body 6 and between the cylinder lock 13 and the body 6 in the plane of presence of the respective axes of the insertion holes 8, the rod hole 9 and the lock hole 10 formed in the bar member 2, perpendicularly to the plane. Hence, large contact areas can be secured between the support members 11 and the tapered pins 12 and between the cylinder lock 13 and the tapered pins 14. As a result, the diameters of the support members 11 and the cylinder lock 13 can be reduced correspondingly, so that the thickness of the device 1 can be reduced correspondingly. Accordingly, the mounting property of the U-shaped antitheft device 1 on an autobicycle can be enhanced.

Further, in accordance with the embodiment of the present invention, the support members 11 and the push rods 20 can be assembled in advance in the condition that each of the springs 21 is assembled in a space formed between corresponding one of the support members 11 and corresponding one of the push rods 20. Hence, these parts can be assembled more easily, so that the number of assembling steps can be reduced more greatly.

Further, in the U-shaped antitheft device 1 according to the embodiment of the present invention, the body 6 of the bar member 2 is configured as a one-piece forging of iron. Hence, the thickness of the bar member 2 can be reduced while the required strength of the bar member 2 is secured. Accordingly, reduction in the number and weight of parts can be achieved as well as the mounting property of the U-shaped antitheft device 1 on an autobicycle can be enhanced.

As it has become clear from the above description, according to the first aspect to the third aspect of the invention, the connection of the support members and/or the cylinder lock to the bar member is performed by knocking of the pin members. Accordingly, it becomes unnecessary to control the outer diameter of the support members and/or the cylinder lock and the inner diameter of the rod hole and/or the lock hole strictly. Moreover, since any thread cutting process, or the like, is not required, respective parts can be processed and assembled easily, so that the number of processing steps and the number of assembling steps are reduced. Hence, it is possible to obtain such an effect that reduction in the cost of the U-shaped antitheft device can be achieved. Moreover, the connection of the support members and/or the cylinder lock to the bar member is performed by the pin members knocked into the boundary portions between the support members and the bar member and/or between the cylinder lock and the bar member in the plane of presence of the respective axes of the insertion holes, the rod hole and the lock hole formed in the bar member, perpendicularly to the plane. Accordingly, a large contact area can be secured between the support members and the pin members and/or between the cylinder lock and the pin members. Hence, the diameter of the support members and/or the cylinder lock can be reduced correspondingly, so that the thickness of the device can be reduced correspondingly. Hence, it is possible to obtain such a further effect that the mounting property of the U-shaped antitheft device on a vehicle can be enhanced.

In addition, when each of the support members has a length set to be approximately equal to that of corresponding one of the rod members, and wherein each of the urge members is received in a space which is formed between the support member and the rod member, the support members and the rod members can be assembled in advance in the condition that each urge member is received in a space formed between corresponding one of the support members and corresponding one of the rod members. Accordingly, it is possible to obtain such an effect that respective parts can be assembled more easily, so that the number of assembling steps can be reduced more greatly.

Further, when the bar member is configured as a one-piece forging of iron, the thickness of the bar member can be reduced while the required strength of the bar member is secured. Hence, it is possible to obtain such an effect that reduction in the number and weight of parts can be attained as well as the mounting property of the U-shaped antitheft device on a vehicle can be enhanced.

## Claims

1. A U-shaped antitheft device comprising:
a U-shaped arm member (3) having lock recesses (4a) formed in both end portions thereof;
a bar member (2) including,
a body member (6) having a pair of insertion holes (8) for receiving said both end portions of said arm member (3), a rod hole (9), and a lock hole (10), wherein said insertion holes (8), said rod hole (9) and said lock hole (10) have axes which are contained in a sole plane;
a rod member (20) having a right and left rod members (20, 20) which are slidably received in said rod hole (9) and respectively engaged/disengaged with/from said lock recesses (4a) of said arm member (3);
a cylinder lock (13) received within said lock hole (10);
urge member (21) having right and left urge members (21, 21) which are provided in said rod hole (9) for respectively urging said right and left rod members (20) towards said lock hole;
support member (11) having right and left support members which are secured to said rod hole (9) for supporting said right and left urge members (21) respectively, and
at least one of a first pin member (12) and a second pin member (14), said first pin member connecting said support members (11) to said body member (6), and said second pin member connecting said cylinder lock (13) to said body member (6).

2. The U-shaped antitheft device according to claim 1, wherein said first pin member (12) is provided in a first boundary portion between said body member (6) and said support member (11).

3. The U-shaped antitheft device according to claim 2, wherein said first pin members (12, 14) is knocked into said first boundary portion in a direction perpendicular to said plane.

4. The U-shaped antitheft device according to claim 1, wherein said second pin member (14) is provided in a second boundary portion between said cylinder lock (13) and said body member (6).

5. The U-shaped antitheft device according to claim 4, wherein said second pin members (14) is knocked into said second boundary portion in a direction perpendicular to said plane.

6. The U-shaped antitheft device according to claim 1, wherein said bar member (2) comprises both of said first and second pin members (12, 14).

7. The U-shaped antitheft device according to claim 6, wherein said first pin member (12) is provided in a first boundary portion between said body member (6) and said support member (11), and said second pin member (14) is provided in a second boundary portion between said cylinder lock (13) and said body member (6).

8. The U-shaped antitheft device according to claim 7, wherein said first and second boundary portions are located in said plane.

9. The U-shaped antitheft device according to claim 8, wherein said first and second pin members(12, 14) are respectively knocked into said first and second boundary portions in directions perpendicular to said plane.

10. The U-shaped antitheft device according to any one of claims 1-9, wherein said support member (11) slidably supports said rod member (20).

11. The U-shaped antitheft device according to any one of claims 1-9, wherein said support member (11) has a length set to be approximately equal to that of corresponding said rod member (20), and wherein said urge member (21) is received in a space which is formed between said support member (11) and said rod member (20).

12. The U-shaped antitheft device according to any one of claims 1-9, wherein said bar member (2) is formed as a one-piece forging of iron.

13. The U-shaped antitheft device according to any one of claims 1-9, wherein said pin member (12, 14) is taper-shaped.
